# EUROPEAN PATENT APPLICATION

(11) **EP 2 565 439 A1**
(43) Date de publication de la demande: **06.03.2013**
(21) Numéro de dépôt: 11771625.8
(22) Date de dépôt: 07.03.2011
(51) Int. Cl.: F03B 13/20, E02B 9/08

(54) **SYSTEME DE GENERATION D'ENERGIE A PARTIR DU MOUVEMENT DES VAGUES MARINES**

(30) Priorité: 22.04.2010 ES 201030593
(71) Demandeur: Azpiroz Villar, Francisco, 20008 San Sebastian (ES)
(72) Inventeur: Azpiroz Villar, Francisco, 20008 San Sebastian (ES)
(74) Mandataire: Urizar Barandiaran, Miguel Angel
(86) Numéro de dépôt international: PCT/ES2011/070147
(87) Numéro de publication internationale: WO 2011/131811

(57) **Abrégé**

L'invention concerne un système de génération d'énergie à partir du mouvement des vagues marines, qui comprend: au moins: - une embarcation (2) porteuse d'au moins un axe-rotor (3) qui agit sur un générateur d'électricité; -au moins, un réservoir (5) relié à et solidaire de l'embarcation (2) et rempli d'eau de mer de sorte qu'il reste juste à la hauteur de la ligne de flottaison (f); -au moins, un flotteur (1) relié à l'embarcation (2) au moyen d'un bras (11); et -des moyens mécaniques pour transmettre le mouvement du flotteur (1) à l'axe-rotor (3) correspondant. En outre, l'embarcation (2) est fixée à un cadre flottant (4). Plusieurs embarcations (2) peuvent être reliées à un cadre flottant (4); et/ou plusieurs cadres flottants (4) peuvent être reliés entre eux. Un ou plusieurs réservoirs (5) peuvent également être reliés auxdits cadres flottants.

## Description

L'objet de l'invention se réfère à un générateur d'énergie à partir du mouvement des vagues marines, en recherchant une construction, un transport, une installation et un maintien économiques.

Pour obtenir de l'énergie à partir des vagues marines, un élément flottant (bouée) est nécessaire, lequel se déplace par rapport à un point, qui permet de marquer la référence du mouvement.

Il existe trois manières de fixer ce point de référence :
a) la terre ferme, dans quel cas il existe des flotteurs ou des bouées qui se déplacent avec le mouvement des vagues et au moyen de bras transmettent ce mouvement à un générateur qui est à terre;
b) fixer le mouvement par rapport au fond océanique, de sorte que les bouées ou les flotteurs se déplacent par rapport à une structure fixée au fond marines; et
c) que la référence soit aussi un élément flottant, de sorte qu'une partie de référence baisse, que l'autre monte et vice versa en fonction de la période de la vague. Si un point de référence mobile est fixé, celui-ci doit avoir une masse, c'est-à-dire un poids suffisant pour définir l'effort entre les deux parties mobiles.

Le système objet de l'invention se compose principalement de, au moins, une embarcation dans laquelle sont disposés des réservoirs, adossés latéralement à celle-ci et placés juste sous la ligne de flottaison. Ces réservoirs sont remplis d'eau et, une fois en mer, ils agissent comme lest au moment de recevoir l'élan des bouées qui sont fixées au moyen de bras aux deux côtés de l'embarcation. Ces bouées, étant donné le mouvement des vagues, montent et baissent par rapport à l'embarcation en agissant sur un axe qui déplace le générateur. Quand les bouées montent avec l'élan des vagues, l'embarcation tend aussi à monter. Pour éviter ce mouvement de l'embarcation, c'est-à-dire, pour maintenir l'embarcation à son emplacement, il est nécessaire que celle-ci soit lestée avec un poids, de telle manière que le mouvement ascendant des bouées soit directement transmis aux bras en transmettant ainsi une énergie suffisante.

Le système objet de l'invention se caractérise par le fait qu'il dispose de:
- au moins, une embarcation porteuse disposant, au moins, d'un axe-rotor de chaque côté qui agit sur un générateur d'électricité; en disposant des axe-rotors à bâbord et à tribord de l'embarcation;
- au moins un réservoir, uni et solidaire à l'embarcation et plein d'eau de mer de sorte qu'il soit juste à la hauteur de la ligne de flottaison au repos sans vagues;
- au moins une bouée de chaque côté (bâbord et tribord); et
- des moyens mécaniques de roues libres ou cliquets pour transmettre le mouvement à l'axe-rotor correspondant.

Dans une forme de réalisation préférentielle, l'objet de l'invention se caractérise aussi par le fait que l'embarcation est soumise, au moins, à un cadre flottant, auquel on unit un ou plusieurs des réservoirs mentionnés; en les remplissant d'eau de mer de sorte que le cadre flottant soit juste à la hauteur de la ligne de flottaison de l'embarcation.

Dans l'objet de l'invention, il est inclus que plusieurs embarcations soient unies au cadre flottant; que plusieurs cadres flottants soient unis entre eux, ainsi que les dits réservoirs remplis d'eau soient disposés, indistinctement, dans l'embarcation (ou embarcations, le cas échéant) et/ou dans le cadre flottant (ou cadres flottants, le cas échéant).

Conformément au système proposé, le lest qui donne du poids à l'embarcation est de l'eau de mer même, puisqu'elle pèse plus que l'air et peut être récupérée, pour cela, des réservoirs d'eau sont placés des deux côtés de l'embarcation juste à la hauteur de la ligne de flottaison et de manière totalement solidaire avec cette dernière. Une fois que la station génératrice est en mer, les réservoirs sont remplis avec de l'eau de mer et les bras latéraux sont étendus avec leurs bouées correspondantes. Ces bouées monteront et baisseront en transmettant le mouvement à l'axe de l'embarcation. À ce moment, l'embarcation tendra à monter grâce à la force des bouées et la retenue de l'axe qui agit sur le générateur, à ce moment aussi, les réservoirs chargés d'eau qui étaient juste sous la ligne de flottaison monteront. Ces réservoirs, en sortant de l'eau, ajoutent leur poids à celui de l'embarcation, en augmentant la résistance du bras des bouées dont l'effort est transmis aux axes qui agissent sur le générateur.

Le grand avantage de ce système est que d'importants contrepoids placés préalablement pour maintenir le point de référence ne sont pas nécessaires. En outre, ils sont faciles à transporter, et une fois dans l'eau, la structure ancrée et les réservoirs pleins, de l'énergie se produit déjà.

Un autre avantage important de ce système est qu'il permet de produire de l'énergie indépendamment de la position que prend l'embarcation selon le vent et/ou les courants marins, ce pourquoi son ancrage au fond océanique n'est pas problématique.

Pour cette raison, le contenu de la présente demande constitue une invention nouvelle impliquant une activité inventive, laquelle peut être appliquée dans le secteur industriel.

Dans le but de mieux comprendre l'objet de la présente invention, une forme préférentielle de réalisation pratique est représentée sur les plans, laquelle est susceptible de changements accessoires ne dénaturant pas son fondement.
La figure 1 est un schéma général du système objet de l'invention, à l'arrêt, pour observer son principe de fonctionnement.
La figure 2 est un schéma général, semblable à la figure précédente, en position de travail; où ont été représentées les différentes forces d'action de l'embarcation (2) - Fb-, des réservoirs (5) - Fd- et des bouées (1) - Ff- ainsi que ses sens d'action.

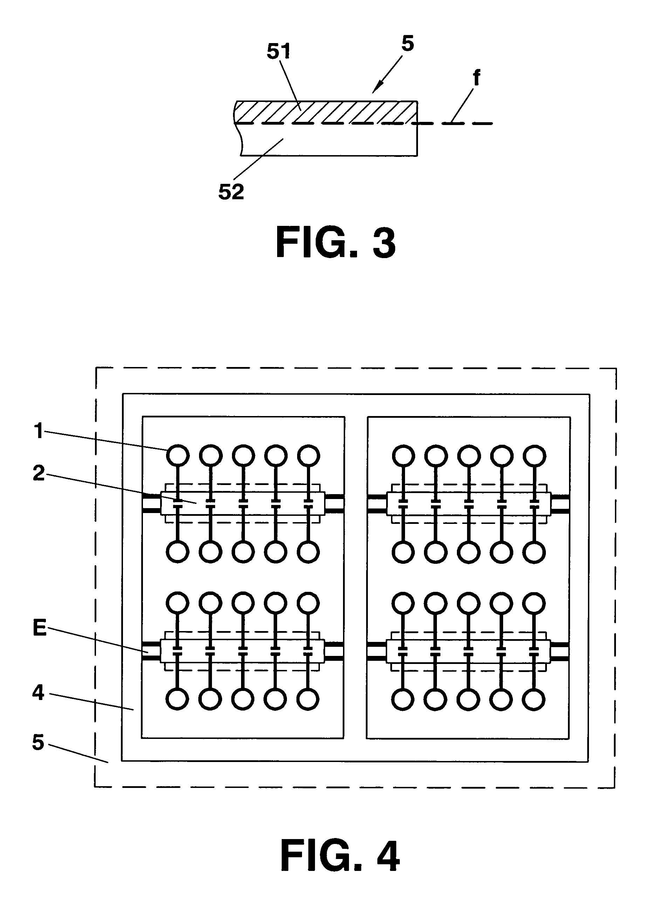

La figure 3 est un détail augmenté selon l'indication D de la figure 2, dans laquelle l'on a partiellement représenté un réservoir (5) rempli de masses d'eau (51), (52) qui, respectivement, restent au-dessus et au-dessous la ligne de flottaison (f).
La figure 4 est un schéma général d'un exemple de réalisation incluant plusieurs embarcations (2) fixées à une structure commune (E) à laquelle est uni le cadre flottant (4), qui, à son tour, présente un réservoir (5) adossé.

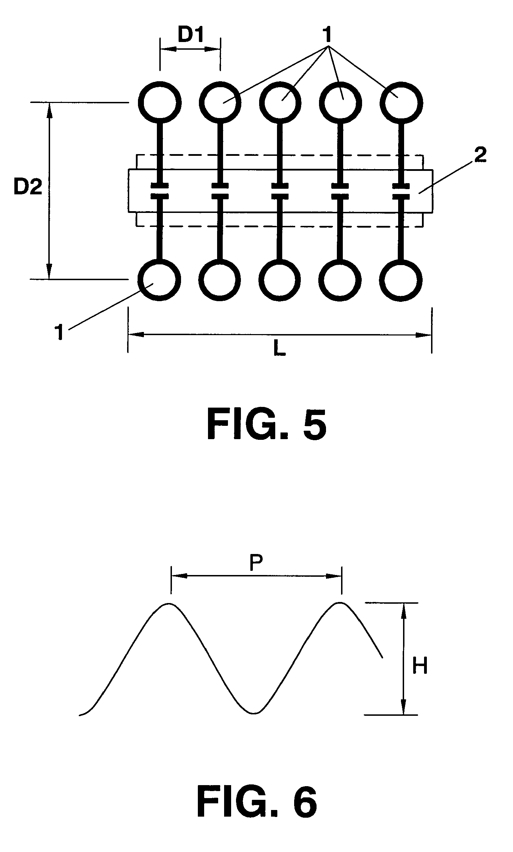

La figure 5 est une représentation partielle et unitaire de la figure 4, dans laquelle l'on a indiqué la distance (D1) entre des bouées (1) d'un même côté d'une embarcation (2) ; la distance (D2) entre les bouées (1) aux deux côtés d'une embarcation (2) et la longueur totale (L) de cette embarcation (2).
La figure 6 est une représentation graphique des dimensions d'une vague, avec la hauteur (h) et la période (P) qui, pour une vague typique sont, respectivement de 2 mètres et de 15 mètres.

Ci-dessous est décrit un exemple de réalisation pratique, non restrictive, de la présente invention. D'autres modes de réalisation dans lesquels sont introduit des changements accessoires ne dénaturant pas son fondement ne sont absolument pas écartés ; au contraire, la présente invention comprend aussi toutes ses variantes.

Conformément à l'invention, le système de génération d'énergie à partir du mouvement des vagues marines objet de l'invention, inclut, principalement:
- au moins une bouée (1);
- au moins une embarcation (2);
- au moins un axe-rotor (3);
- au moins un cadre flottant (4); et
- au moins, un réservoir (5).

Conformément à l'invention, l'embarcation (2) comporte, au moins, un axe-rotor (3) de chaque côté; c'est-à-dire, un axe-rotor (3) à bâbord et un autre axe-rotor (3) à tribord de l'embarcation (2). Ces axe-rotors (3) agissent sur un générateur d'électricité.

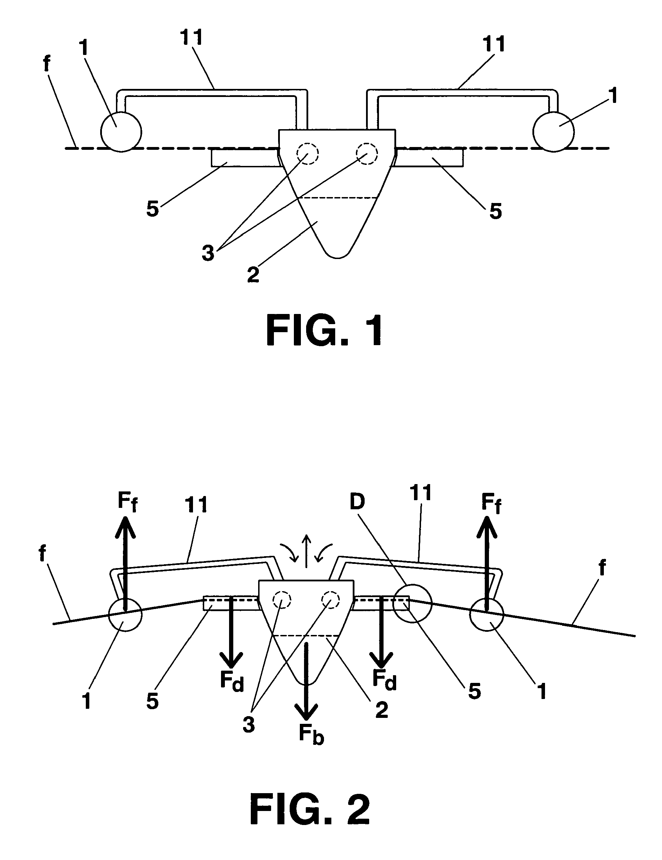

L'embarcation (2) présente, uni solidairement, au moins un réservoir (5). Chaque réservoir (5) est rempli d'eau de mer; de sorte que, au repos (sans vagues), les réservoirs (5) soient juste à la hauteur de la ligne de flottaison (f). Consulter figure 1.

Conformément à l'invention, l'on dispose aussi au moins une bouée (1) de chaque côté de l'embarcation (2); c'est-à-dire, une bouée (1) à bâbord et à une autre bouée (1) à tribord. Ces bouées (1) sont unies solidairement à l'embarcation (2). Les bouées (1), logiquement, restent aussi à la hauteur de la ligne de flottaison (f). Consulter figure 1.

De plus, l'embarcation (2) est fixée à des cadres flottants (4).

Il est indistinct et accessoire aux effets de l'invention, et entre autres, que :
- le réservoir (5), les réservoirs (5) ou certains des réservoirs (5) soient unis à l'embarcation (2) ou au cadre flottant (4);
- une ou plusieurs embarcations (2) soi(en)t unie(s) au cadre flottant (4) ou à chaque cadre flottant (4);
- l'on dispose un seul cadre flottant (4), ou plusieurs cadres flottants (4) unis entre eux.

En cas de mer calme (sans vagues) l'on ne produit pas de l'énergie (voir figure 1), mais quand de la houle survient subitement, des forces en différents sens (voir figure 2) sont générée : l'embarcation (2) produit une force (Fb) dans le sens descendant; les réservoirs (5) chargés d'eau produisent des forces (Fd), dans le sens descendant aussi; et les bouées (1) produisent des forces (Ff) en sens ascendant, en transmettant leur mouvement à l'axe-rotor (3) au moyen du bras respectif (11).

Entre ces bras (11) et son axe-rotor (3) sont disposés les moyens mécaniques pour transmettre le mouvement depuis la bouée (1) à l'axe-rotor (3) dans une seule direction (dans ce sens, mais pas dans le sens contraire). Ces moyens mécaniques employés ne sont pas décrits (car ils sont connus), qui sont des roues libres ou des cliquets (avec ou sans poulie d'inversion).

Pour le dimensionnement du système conformément à l'invention, nous considérons que les vagues ont des périodes (P) qui varient en fonction de leur hauteur (H) et cette valeur de la période (P) de la vague est prise comme référence.

La distance (D1) entre les bouées (1) des deux côtés peut être la moitié de cette période (P).

La distance (D2) entre les deux côtés peut être la période (P) même ou des multiples de la moitié de la période (P).

La longueur (L) de l'embarcation (2), en principe, doit être égale ou supérieure à la période (P) de la vague, afin d'intégrer les mouvements des vagues, de sorte qu'elle suppose un point de référence solide avec les réservoirs (5).

Pour se faire une idée des dimensions du système, nous prendrons comme exemple des vagues de 2 mètres de hauteur (H) (qui sont normales sur nos côtes). La période (P) typique de ces vagues est de 15 mètres. Par conséquent, la distance (D1) peut être de 7,5 mètres, la distance (D2) 15 mètres (ou des multiples de 7,5 mètres) et la longueur (L) de l'embarcation (2) égale ou supérieure à 15 mètres.

Le principe de fonctionnement du système objet de l'invention se base sur le fait que, quand les vagues baissent, les bouées (1) baissent librement de par leur propre poids, et, quand la vague monte, elle pousse la bouée (1) vers le haut. En appliquant le théorème d'Archimède, la bouée (1) produit un effort qui est transmis au moyen d'un système de roues libres ou de cliquets à un axe-rotor (3) qui agit sur le générateur. Ce système de roues libres permet que l'effort de la bouée (1) sur l'axe-rotor (3) se donne uniquement quand elles montent, en étant libres en baissant. Le mouvement des bouées (1) d'un côté de l'embarcation (2), fait tourner leur axe-rotor (3) correspondant dans un sens, tandis que les bouées (1) de l'autre côté, feront tourner leur axe-rotor (3) correspondant dans le sens contraire. De cette manière, pour additionner les efforts des deux axe-rotors (3) et agir sur le générateur, il est nécessaire d'invertir préalablement le sens de rotation de l'un des deux.

Nous ne décrivons pas dans plus de détails (ni le représentons sur les figures), le fameux principe de fonctionnement de la transmission du mouvement au moyen de roues libres ou de cliquets (ce n'est, en outre, pas l'objet de l'invention).

Les matériaux, les dimensions, proportions et, en général, tous les autres détails accessoires ou secondaires n'altérant pas, ni ne changeant ou ne modifiant pas le fondement proposé pourront être variables.

Les termes dans lesquels est rédigé ce mémoire sont vrais et reflètent fidèlement l'objet décrit, et doivent être entendus dans leur sens le plus vaste, et ceci en aucun cas de manière limitative.

## Revendications

1. Système de génération d'énergie à partir du mouvement des vagues marines, **caractérisée par le fait qu'**il se compose de
a) au moins, un embarcation (2) comportant au moins, un axe-rotor (3) qui agit sur un générateur d'électricité;
b) au moins, un réservoir (5) uni et solidaire à l'embarcation (2) et rempli d'eau de mer de sorte qu'il soit juste à la hauteur de la ligne de flottaison (f);
c) au moins, une bouée (1) unie à l'embarcation (2), au moyen d'un bras (11);
d) des moyens mécaniques de roues libres ou de cliquets pour transmettre le mouvement de chaque bouée (1) à l'axe-rotor correspondant (3).

2. Système de génération d'énergie à partir du mouvement des vagues marines, selon la revendication 1, **caractérisé par le fait que** l'embarcation (2) est fixée à un cadre flottant (4).

3. Système de génération d'énergie à partir du mouvement des vagues océaniques, selon la revendication 1, **caractérisé par le fait qu'**il dispose, au moins, d'une bouée (1) de chaque côté de l'embarcation (2), à bâbord et à tribord.

4. Système de génération d'énergie à partir du mouvement des vagues marines, selon la revendication 1, **caractérisé par le fait qu'**il dispose, au moins, d'un axe-rotor (3) de chaque côté de l'embarcation (2), à bâbord et à tribord.

5. Système de génération d'énergie à partir du mouvement des vagues marines, selon la revendication 2, **caractérisé par le fait que** l'on unit au cadre flottant (4) un réservoir (5) rempli d'eau de mer de manière à ce qu'il soit placé juste à la hauteur de la ligne de flottaison (f).

6. Système de génération d'énergie à partir du mouvement des vagues marines, selon la revendication 5, **caractérisé par le fait que** plusieurs embarcations (2) sont unies au cadre flottant (4).

7. Système de génération d'énergie à partir du mouvement des vagues marines, selon la revendication 6, **caractérisé par le fait que** plusieurs cadres flottants (4) sont unis entre eux.
